# EUROPEAN PATENT APPLICATION

(11) **EP 4 674 817 A1**
(43) Date of publication of application: **07.01.2026**
(21) Application number: 24792389.9
(22) Date of filing: 12.03.2024
(51) Int. Cl.: C02F 1/32, B01J 19/12, H05H 1/24

(54) **FLUID TREATMENT DEVICE AND LIGHTING CIRCUIT**

(30) Priority: 20.04.2023 JP 2023068999
(71) Applicant: Ushio Denki Kabushiki Kaisha, Tokyo 100-8150 (JP)
(72) Inventor: ODA Koji, Tokyo 100-8150 (JP); URAKAMI Hideyuki, Tokyo 100-8150 (JP); FUJISAWA Shigeki, Tokyo 100-8150 (JP); SHIGOKU Minoru, Tokyo 100-8150 (JP)
(74) Representative: Maiwald GmbH
(86) International application number: PCT/JP2024/009571
(87) International publication number: WO 2024/219113

(57) **Abstract**

Provided are a fluid treatment device and a lighting circuit that enable an ultraviolet light irradiation unit to stably light up regardless of a treatment state of fluid. The fluid treatment device includes: a lighting circuit that includes a DC power supply, a transformer including a primary winding and a secondary winding, and a switching element, the lighting circuit being configured to cause the secondary winding of the transformer to generate electromotive force in accordance with switching of the switching element between an ON state and an OFF state; an ultraviolet light irradiation unit that includes a first electrode disposed in a light-emitting tube in which a light-emitting gas is sealed, and a second electrode disposed apart from the light-emitting tube, a space into which a fluid to be treated flows being interposed between the first electrode and the second electrode, the ultraviolet light irradiation unit being connected to the secondary winding of the transformer; a detection unit that detects an electric conductivity of the fluid; and a controller that controls a frequency at which the switching element is switched between the ON state and the OFF state on the basis of the electric conductivity of the fluid that has been detected by the detection unit, or a parameter relating to the electric conductivity of the fluid.

## Description

### TECHNICAL FIELD

The present invention relates to a fluid treatment device and a lighting circuit mounted on the fluid treatment device.

### BACKGROUND ART

Manufacturing of high-purity water is essential for cleaning of semiconductors or precision devices, manufacturing of pharmaceuticals, microanalysis devices, and other purposes. For example, in cleaning treatment in a process of manufacturing semiconductor devices, liquid medicine or detergent in high concentrations and a large amount of pure water (ultrapure water) for rinsing out the liquid medicine or the detergent are used. In recent years, as a result of higher degrees of miniaturization, densification, and integration of the circuit patterns of semiconductor devices, the requirements for the water quality of pure water have been increasing. It is requested that pure water to be used in a cleaning process or another process have an extremely low level of total organic carbon (TOC), which is one of water quality control items. This is because, if pure water contains a large amount of organic matter, there is a possibility that the organic matter will be carbonized in a subsequent heat treatment process and this will cause insulation failure.

Against the background of increasing requirements for the water quality of pure water, in recent years, a variety of methods for decomposing and removing a minute amount of organic matter contained in pure water have been considered. A typical example of such a method is a method for decomposing and removing organic matter contained in fluid by irradiating water with ultraviolet light (see Patent Document 1 below).

### PRIOR ART DOCUMENT

### PATENT DOCUMENT

Patent Document 1: JP-B2-6432442

### SUMMARY OF THE INVENTION

### PROBLEMS TO BE SOLVED BY THE INVENTION

The device described in Patent Document 1 above is a fluid treatment device that irradiates a fluid to be treated with ultraviolet light from an ultraviolet light irradiation unit configured to light up by causing the fluid to flow in between electrodes to form an electric conduction path.

Here, the present inventors have earnestly considered further improvements in the fluid treatment device to notice that, in the conventional fluid treatment device, a lighting state of the ultraviolet light irradiation unit gradually becomes unstable or the ultraviolet light irradiation unit is turned off in a process of treating the fluid in some cases.

In view of the problem described above, an object of the present invention is to provide a fluid treatment device and a lighting circuit that enable an ultraviolet light irradiation unit to stably light up regardless of a treatment state of fluid.

### MEANS FOR SOLVING THE PROBLEMS

A fluid treatment device according to the present invention includes:
a lighting circuit that includes a DC power supply, a transformer including a primary winding and a secondary winding, and at least one switching element, the lighting circuit being configured to switch between supplying and stopping of a current from the DC power supply to the primary winding of the transformer or change a direction of a current that flows through the primary winding in accordance with switching of the switching element between an ON state and an OFF state, and to cause the secondary winding of the transformer to generate electromotive force;
an ultraviolet light irradiation unit that includes a first electrode disposed in a light-emitting tube in which a light-emitting gas is sealed, and a second electrode disposed apart from the light-emitting tube, a space into which a fluid to be treated flows being interposed between the first electrode and the second electrode, the ultraviolet light irradiation unit being connected to the secondary winding of the transformer;
a detection unit that directly or indirectly detects an electric conductivity of the fluid; and
a controller that controls a frequency at which the switching element is switched between the ON state and the OFF state on the basis of the electric conductivity of the fluid that has been detected by the detection unit, or a parameter relating to the electric conductivity of the fluid.

To "directly detect" described here is intended to mean, for example, the case of directly measuring the electric conductivity of a fluid to be treated by using a device configured to measure the electric conductivity. In addition, to "indirectly detect" described here is intended to mean, for example, the case of indirectly deriving a change in the electric conductivity of the fluid to be treated by measuring a voltage between predetermined nodes in the primary winding or the secondary winding of the transformer, a current that flows through a predetermined node, or power.

The fluid treatment device having the configuration described above controls a frequency at which the switching element is switched, on the basis of a signal from the detection unit. Specifically, an ON time period, an OFF time period, or a period of the ON state and the OFF state of the switching element is controlled.

For example, in a case where the electric conductivity of the fluid by the detection unit is high (in a case where an amount of impurities in the fluid is large), the fluid treatment device having the configuration described above performs control to cause the ON time period of the switching element to be short relative to the OFF time period, or performs control to lower a frequency at which switching is performed between the ON state and the OFF state, and therefore the fluid treatment device can perform control to reduce a load on the circuit even in a case where the electric conductivity of the fluid has changed.

As another example, in a case where the electric conductivity of the fluid by the detection unit is high (in a case where an amount of impurities in the fluid is large), the fluid treatment device having the configuration described above performs control to cause the ON time period of the switching element to be long relative to the OFF time period, or performs control to raise a frequency at which switching is performed between the ON state and the OFF state, and therefore the fluid treatment device can perform control to increase a lamp current and increase an amount of decomposition of TOC in a case where the amount of impurities in the fluid has increased.

In the fluid treatment device,
the lighting circuit may be a circuit of any of a push-pull type, a full-bridge type, and a half-bridge type.

For lighting the ultraviolet light irradiation unit, a lighting type of applying a voltage from the DC power supply via the transformer to the ultraviolet light irradiation unit can be employed. Specific examples of a circuit type include a flyback type, a push-pull type, a half-bridge type, and a full-bridge type.

As described above, at the time of performing treatment, that is, at the time of lighting the ultraviolet light irradiation unit, the fluid treatment device is in a state where an electric conduction path has been formed where the ultraviolet light irradiation unit is connected in series to a fluid having an electric conductivity that is lower than that of the wiring or the like that forms an electric circuit.

In particular, in a case where a relatively large output is required, the push-pull type, the half-bridge type, or the full-bridge type is employed from among the types described above of the lighting circuit.

Accordingly, the present inventors have considered forming a fluid treatment device in which a lighting circuit of the push-pull type, the half-bridge type, or the full-bridge type, which is generally applied to a conventional ultraviolet light irradiation unit (a discharge lamp), is applied to an ultraviolet light irradiation unit for fluid treatment.

However, in the fluid treatment device using the type described above, as described above, a phenomenon has occurred where the ultraviolet light irradiation unit gradually enters into an unstable lighting state or does not light up in a process of treating the fluid, in some cases.

The present inventors have conducted earnest studies to discover that the phenomenon results from a change in the electric conductivity of the fluid in the process of treating the fluid. Details thereof will be described below.

A lighting circuit of the push-pull type, the half-bridge type, or the full-bridge type is a circuit that switches the switching element between the ON state and the OFF state to switch a direction of a current to be generated in the primary winding of the transformer, and generates electromotive force in the secondary winding. These circuit types have a circuit configuration in which a closed circuit is formed at all times except for the moment of switching the switching element.

When the treatment has proceeded, the electric conductivity of the fluid changes due to, for example, decomposition and removal of impurities in many cases. In addition, an amount of impurities contained in the fluid is not constant, and the electric conductivity locally increases or decreases in some cases. As an example, in a case where TOC is decomposed and removed by irradiating water with ultraviolet light, the electric conductivity of the water decreases in accordance with a decrease in organic matter.

Assuming a case where the amount of impurities in the fluid increases, the electric conductivity of the fluid increases, and a current excessively flows through the ultraviolet ray irradiation unit that is connected to the secondary winding, and therefore the ultraviolet light irradiation unit is likely to abnormally discharge electricity. Moreover, the lighting circuit enters into an overload state, and damage is likely to occur in elements, wiring, or the like that constitute the circuit due to the occurrence of abnormal heat generation or the like. As described above, a change in the electric conductivity of the fluid causes problems such as an unstable lighting state of the ultraviolet light irradiation unit, or non-lighting of the ultraviolet light irradiation unit.

The present inventors who have discovered the cause described above have come up with a new idea of controlling electromotive force generated in the secondary winding of the transformer in accordance with a variation in the electric conductivity of the fluid, in the lighting circuit of the ultraviolet light irradiation unit that lights up by interposing a fluid to be treated between electrodes.

A current that corresponds to the electric conductivity of the fluid that has been detected by the detection unit flows through the primary winding of the transformer. Electromotive force generated in the secondary winding changes according to the current that flows through the primary winding of the transformer. Therefore, by employing the configuration described above, even if a treatment state, that is, the electric conductivity, of the fluid varies, power for lighting the ultraviolet light irradiation unit is stably supplied between the electrodes of the ultraviolet light irradiation unit. Accordingly, the fluid treatment device having the configuration described above enables the ultraviolet light irradiation unit to stably generate ultraviolet light, regardless of the treatment state of the fluid.

In the fluid treatment device,
the lighting circuit may be a circuit of a flyback type.

In contrast to a circuit of the push-pull type or the like, in a lighting circuit of the flyback type, a circuit that is connected to the primary winding of the transformer switches between an open circuit and a closed circuit in accordance with switching of the switching element between the ON state and the OFF state. In other words, when the discharge of the ultraviolet light irradiation unit stops, and electromotive force is generated in the primary winding, the switching element is in the OFF state.

Most of the electromotive force generated in the primary winding after the ultraviolet light irradiation unit has stopped has been consumed due to heat generation in circuit elements, the release of charges to a ground terminal, or the like, when the switching element is switched from the OFF state to the ON state next time. Therefore, in the lighting circuit of the flyback type, the electromotive force generated in the primary winding is unlikely to affect electromotive force to be generated in the secondary winding.

Accordingly, by employing the configuration described above, in the fluid treatment device, a voltage applied to the ultraviolet light irradiation unit is more unlikely to be affected by a change in the electric conductivity of fluid due to progression of the treatment. In other words, the fluid treatment device having the configuration described above enables the ultraviolet light irradiation unit to more stably light up, regardless of a treatment state of the fluid.

In the fluid treatment device,
the detection unit may be connected to the secondary winding of the transformer.

In the fluid treatment device,
the detection unit may be a TOC monitor that directly detects the electric conductivity of the fluid.

The detection unit is connected to the secondary winding of the transformer, and therefore the detection unit is connected in series or in parallel to a circuit with the fluid interposed. Therefore, in comparison with a configuration in which the detection unit is connected to a side of the primary winding that is not directly connected to the fluid, in the configuration described above, the detection unit can more accurately detect the electric conductivity of the fluid.

Control to switch the switching element in response to the detected electric conductivity is performed on the basis of, for example, a data table relating to the electric conductivity of the fluid that has been calculated in advance and a voltage required to light the ultraviolet light irradiation unit. In such a case, if the detected electric conductivity of the fluid and the actual electric conductivity of the fluid greatly deviate from each other, a voltage applied to the ultraviolet light irradiation unit also greatly deviates from an ideal value, and there is a possibility of non-lighting in the worst case.

In other words, by employing the configuration described above, setting is performed in such a way that control to switch the switching element is performed at a frequency suitable for the actual electric conductivity of the fluid, and therefore the ultraviolet light irradiation unit reliably and stably lights up.

In the fluid device,
the detection unit may be connected to the primary winding of the transformer.

In a case where the detection unit is connected to the primary winding of the transformer, the detection unit is not directly connected to the circuit with the fluid interposed. Therefore, a portion of the electromotive force generated in the secondary winding of the transformer is not consumed by the detection unit.

In other words, by employing the configuration described above, all of the electromotive force generated in the secondary winding of the transformer is used to light the ultraviolet light irradiation unit, and therefore an energy loss on a side of the secondary winding is reduced, and this makes circuit design relatively easy.

A lighting circuit according to the present invention is
the lighting circuit included in the fluid treatment device.

### EFFECT OF THE INVENTION

According to the present invention, a fluid treatment device and a lighting circuit that enable an ultraviolet light irradiation unit to stably light up regardless of a treatment state of fluid are achieved.

### BRIEF DESCRIPTION OF THE DRAWINGS

Fig. 1 is a diagram schematically illustrating a configuration of an embodiment of a fluid treatment device.
Fig. 2 is a schematic diagram illustrating a configuration of a lighting circuit according to the embodiment.
Fig. 3 is a timing chart schematically illustrating an example of changes over time in a control signal, a secondary voltage, and a secondary current.
Fig. 4 is a diagram schematically illustrating a configuration of a lighting circuit according to an embodiment.
Fig. 5 is a timing chart schematically illustrating an example of a determination method performed by a controller in response to changes over time in a control signal and a secondary voltage, and a voltage detected by a detection unit.
Fig. 6 is a timing chart schematically illustrating an example of changes over time in a control signal, a primary current, a secondary voltage, and a secondary current.

### MODE FOR CARRYING OUT THE INVENTION

A fluid treatment device and a lighting circuit according to the present invention will be described below with reference to the drawings. Note that all of the drawings described below are schematic illustrations, and the numbers of components on the drawings do not necessarily coincide with the actual numbers of components.

Furthermore, the description below is provided under the assumption that a fluid to be treated is water. However, a fluid to be treated that is applicable to the present invention is not limited to water. Specifically, any fluids, such as a liquid in which the decomposition and removal of a contained substance proceeds or a liquid in which sterilization treatment proceeds by being irradiated with ultraviolet light, can be targets to be treated by the fluid treatment device according to the present invention.

### [First embodiment]

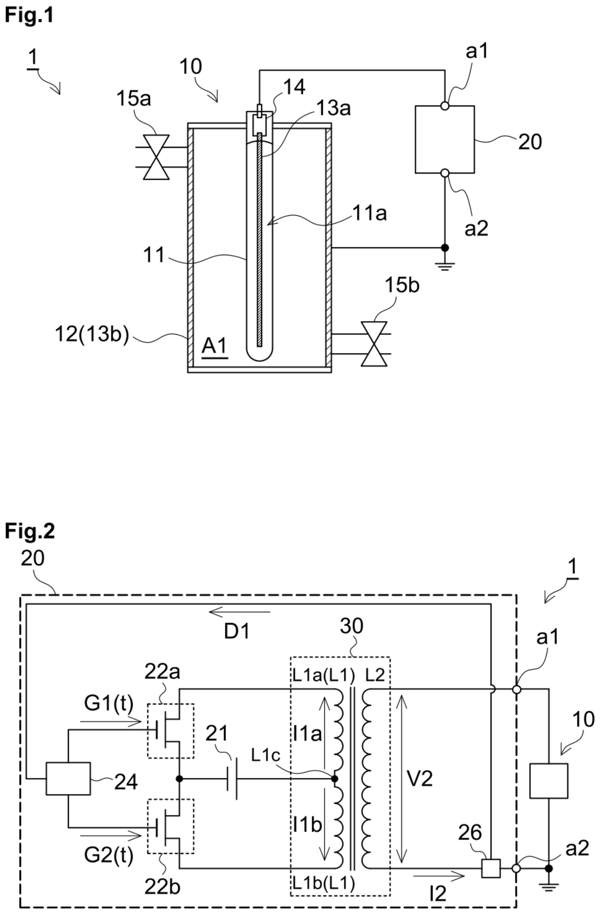

First, a configuration of a first embodiment of a fluid treatment device 1 will be described. Fig. 1 is a diagram schematically illustrating a configuration of the first embodiment of the fluid treatment device 1. As illustrated in Fig. 1, the fluid treatment device 1 includes an ultraviolet light irradiation unit 10 and a lighting circuit 20. The ultraviolet light irradiation unit 10 includes a light-emitting tube 11, a reservoir 12, and a first electrode 13a.

The light-emitting tube 11 includes the first electrode 13a having a bar shape in a discharge space 11a, as illustrated in Fig. 1. The first electrode 13a is connected to a first electrode terminal a1 of the lighting circuit 20 via a pinch sealing portion 14 formed on one end side of the light-emitting tube 11.

The light-emitting tube 11 is a tubular body made of quartz glass, and xenon (Xe) is sealed as a light-emitting gas in the discharge space 11a inside the light-emitting tube 11. The light-emitting gas sealed in the discharge space 11a inside the light-emitting tube 11 is arbitrarily selected depending on treatment to be performed. As a specific example other than the above, a gas containing a group 18 element, such as xenon (Xe) gas, argon (Ar) gas, or krypton (Kr) gas, or a gas containing a group 17 element, such as fluorine (F) gas, chlorine (CI) gas, or bromine (Br) gas, and the group 18 element described above, is selected.

In addition, a material of the light-emitting tube 11 is appropriately selected depending on a wavelength band of ultraviolet light with which a liquid to be treated is to be irradiated.

The reservoir 12 is a container that water to be treated flows into, and that includes a space A1 that is filled with water in accordance with the closure of valves (15a, 15b) during treatment. Note that the reservoir 12 is a container including a side wall made of metal that is conductive, and as illustrated in Fig. 1, the side wall is connected to a second electrode terminal a2 of the lighting circuit 20, and is electrically grounded. In other words, the reservoir 12 according to the first embodiment is a container that stores water to be treated inside the space A1, and also functions as a second electrode 13b.

In the ultraviolet light irradiation unit 10, when a voltage necessary for lighting has started to be applied to the electrodes (13a, 13b) from the lighting circuit 20 in a state where the space A1 of the reservoir 12 is filled with water to be treated, a voltage is applied via the discharge space 11a, a tube wall of the light-emitting tube 11, and the space A1. As a result, discharge occurs in the discharge space 11a of the light-emitting tube 11 that is disposed between the electrodes (13a, 13b). This discharge is dielectric barrier discharge that occurs due to application of a voltage into the discharge space 11a via the light-emitting tube 11 made of a dielectric material and a liquid having impedance. In response to the occurrence of discharge in the light-emitting tube 11, ultraviolet light is generated in the discharge space 11a of the light-emitting tube 11, and the water stored in the space A1 is irradiated with the ultraviolet light.

The first embodiment has been described by using a configuration in which, in irradiating water to be treated with ultraviolet light, treatment is performed in a stationary state with the valves (15a, 15b) closed. However, the valves (15a, 15b) may be omitted, and the fluid treatment device 1 may be configured to irradiate water flowing in at all times with ultraviolet light.

For example, a configuration may be employed where an inflow port through which water flows and a drain port through which treated water is discharged are connected by a pipe, a hose, or the like and treatment is advanced with water circulating. By employing this configuration, a volume of water that fails to be housed in the reservoir 12 at a time can be collectively treated.

Note that a light-emitting tube 11 that is applicable to the present invention is not limited to the light-emitting tube according to the embodiment of Fig. 1. For example, the first electrode 13a is disposed inside the discharge space 11a of the light-emitting tube 11, but the first electrode 13a may be disposed outside the discharge space 11a. In addition, as for the discharge space 11a of the light-emitting tube 11, various forms can be employed in an aspect in which the discharge space 11a is disposed between the first electrode 13a and the second electrode 13b. Note that a liquid having a predetermined impedance is interposed between the light-emitting tube 11 and the second electrode 13b, and therefore the first electrode 13a and the second electrode 13b that is disposed to be separated from the light-emitting tube 11 apply a voltage into the discharge space 11a via the liquid.

Next, details of the lighting circuit 20 will be described. Fig. 2 is a schematic diagram illustrating a configuration of the lighting circuit 20 according to the first embodiment. The lighting circuit 20 is an example of a circuit configuration called the push-pull type, and the lighting circuit 20 includes a DC power supply 21, two switching elements (22a, 22b), a detection unit 26, and a transformer 30, as illustrated in Fig. 2.

The transformer 30 includes a primary winding L1 and a secondary winding L2. One end of terminals included in the primary winding L1 of the transformer 30 is connected to the switching element 22a, and another end is connected to the switching element 22b. In addition, an intermediate node L1c of the primary winding L1 is connected to a positive-electrode side terminal of the DC power supply 21.

In the description below, for convenience of description, as illustrated in Fig. 2, the primary winding L1 is divided into a winding L1a located on a side of the switching element 22a, when viewed from the intermediate node L1c, and a winding L1b located on a side of the switching element 22b, when viewed from the intermediate node L1c. However, the primary winding L1 does not need to be constituted by two windings (L1a and L1b). For example, the primary winding L1 may be constituted by one winding, and an intermediate point of a winding portion may be set as the intermediate node L1c.

The switching element (22a, 22b) of the first embodiment includes a field effect transistor (FET).

Note that as the switching element (22a, 22b), a switching element as opposed to the field effect transistor (FET) may be employed.

The DC power supply 21 may be constituted by, for example, an AC/DC converter that performs AC/DC conversion on a not-illustrated commercial power supply.

The lighting circuit 20 according to the first embodiment includes a controller 24 configured to perform ON/OFF control on the switching elements (22a, 22b). It is sufficient if the controller 24 can output a control signal G1(t) to the switching element 22a and can output a control signal G2(t) to the switching element 22b.

The detection unit 26 according to the first embodiment detects a current that flows to a low-voltage side of the secondary winding L2. Specifically, the detection unit 26 can convert a current that flows through a resistor provided in the detection unit 26 into a voltage value, and can detect the voltage value. Then, the detection unit 26 outputs a detection signal D1 including a measured current value to the controller 24.

Here, a value of a current that flows through the primary winding L1 or the secondary winding L2 changes according to the electric conductivity of a liquid that flows between the electrodes (13a, 13b). The electric conductivity of the liquid increases as impurity concentration increases. This results in an increase in the current that flows through the primary winding L1 or the secondary winding L2. Therefore, by detecting the value of the current that flows through the primary winding L1 or the secondary winding L2 by using the detection unit 26, a change in the electric conductivity of the liquid can be indirectly detected. Note that the value of the current that flows through the primary winding L1 or the secondary winding L2 is a parameter relating to the electric conductivity of the liquid.

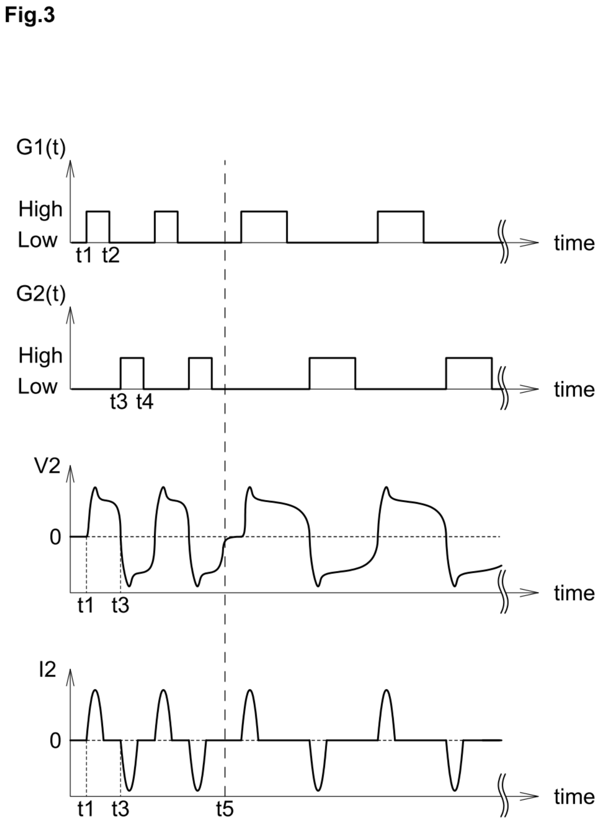

Next, an operation of the lighting circuit 20 will be described. Fig. 3 is a timing chart schematically illustrating an example of changes over time in the control signals (G1(t) and G2(t)) and a secondary voltage V2.

In the graph of the control signal G1(t) in Fig. 3, a High level indicates that the switching element 22a is controlled to be in the ON state, and a Low level indicates that the switching element 22a is controlled to be in the OFF state. The graph of the control signal G2(t) in Fig. 3 illustrates similar control performed on the switching element 22b.

The secondary voltage V2 illustrated in Fig. 3 corresponds to a potential of the first electrode terminal a1 relative to a potential of the second electrode terminal a2 in Fig. 2. In the first embodiment, the second electrode terminal a2 is grounded.

Graphs that are illustrated in the drawings that are referred to in the description below and indicate a variation in a voltage or a current do not indicate an offset, spike noise generated by a switching operation, or the like that does not affect the description of a principal operation of the present invention, and the graphs schematically indicate an example of an ideal waveform, similarly to the graph of the secondary voltage V2 in Fig. 3. Furthermore, whether the secondary voltage V2 shifts to a + side or a - side relative to a predetermined voltage (in the first embodiment, 0 V) may be appropriately and arbitrarily set according to the specifications of the ultraviolet light irradiation unit 10, a configuration of the lighting circuit 20, or the like.

When the reservoir 12 is filled with water to be treated, the controller 24 starts an operation to generate ultraviolet light in the light-emitting tube 11 of the ultraviolet light irradiation unit 10.

The controller 24 switches the control signal G1(t) from the Low level to the High level to switch the switching element 22 from the OFF state to the ON state. Then, a primary current 11a flows to a side of the winding L1a of the primary winding L1 of the transformer 30.

Thereafter, at time t2 when a predetermined time period has passed from time t1, the controller 24 switches an output of the control signal G1(t) from the High level to the Low level. As a result, the switching element 22a switches from the ON state to the OFF state, and the primary current I1a stops.

Next, at time t3, the controller 24 switches an output of the control signal G2(t) from the Low level to the High level. Then, a primary current I1b flows to a side of the winding L1b of the primary winding L1 of the transformer 30.

Thereafter, at time t4 when a predetermined time period has passed from time t3, the controller 24 switches the output of the control signal G2(t) from the High level to the Low level. As a result, the switching element 22b switches from the ON state to the OFF state, and the primary current I1b stops. Thereafter, the controller 24 repeats the control described above.

Here, the controller 24 derives the electric conductivity of liquid on the basis of a current value of the secondary current I2 that has been measured by the detection unit 26, as illustrated in Fig. 3, and adjusts a frequency at which the control described above is repeated, in accordance with the derived electric conductivity. Specifically, when the detection unit 26 has detected an increase in the electric conductivity of the fluid at time t5, the controller 24 performs control to decrease a frequency at which the control signal (G1(t) or G2(t)) is switched in accordance with an increase in the electric conductivity of the fluid.

By performing this control, the ultraviolet light irradiation unit 10 is continuously supplied with power suitable for lighting, regardless of a change in the electric conductivity of the liquid.

### [Verification experiment]

Here, as a method for controlling power to be supplied to the ultraviolet light irradiation unit 10, a method for changing a voltage by using an output of the DC power supply 21 is conceivable in addition to a method for changing a frequency of switching control performed on the switching elements (22a, 22b). Accordingly, a verification experiment has been conducted to confirm which one of these methods is appropriate for the fluid treatment device 1 to control power to be supplied to the ultraviolet light irradiation unit 10, and details thereof will be described.

### (Verification conditions)

As a reference, the power consumption of the DC power supply 21 in a case where a liquid to be treated is pure water, was used. This is because it is assumed that the operation control of the circuit is basically performed on a side of the primary winding L1 of the transformer 30.

In a case where the liquid to be treated was changed to tap water, a comparison was made between adjustment performed by changing the output voltage of the DC power supply 21 and adjustment performed by changing a frequency in switching control performed on the switching elements (22a, 22b), while monitoring a voltage value and a current value at each node of the lighting circuit 20, to verify which type of adjustment easily and more accurately produces a result closer to the reference described above.

A specific procedure is as follows. First, pure water is used as a liquid to be treated, and an output voltage (V) and power consumption (W) of the DC power supply 21, a frequency (Hz) in switching control performed on the switching elements (22a, 22b), voltages (Vp-p and Vrms) applied between the electrodes (13a, 13b), and a current (mArms) that flows between the electrodes (13a, 13b) immediately after the start of operation are measured (Reference 1). Note that the pure water described here is water having a TOC concentration of about 500 ppb or less (a specific resistance value of 0.2 MΩ cm or more).

Next, the liquid to be treated is changed from pure water to tap water, and each of the parameters described above immediately after the start of operation is measured (Reference 2).

Thereafter, by changing the output voltage (V) of the DC power supply 21 (Comparative Example) or by changing the frequency in switching control performed on the switching elements (22a, 22b) (Example), adjustment was performed to obtain power consumption that is equal to the power consumption of the DC power supply 21 in a case where the liquid to be treated is pure water. Then, influences of these types of adjustment on the voltages (Vp-p and Vrms) applied between the electrodes (13a, 13b) and the current (mArms) that flows between the electrodes (13a, 13b) were checked.

### (Results)

Results as indicated in Table 1 below were obtained.

**[Table 1]**

| | DC power supply 21 | | Switching elements (22a, 22b) | Electrodes (13a, 13b) | | |
|---|---|---|---|---|---|---|
| | Output voltage (V) | Power consumption (W) | Frequency (kHz) | Voltage (Vp-p) | Voltage (Vrms) | Current (mArms) |
| Reference 1 | 56.2 | 13.8 | 70.2 | 3,230 | 857 | 41.6 |
| Reference 2 | 57.2 | 17.5 | 70.1 | 3,310 | 882 | 61.3 |
| Comparative Example | 51.1 | 13.8 | 70.0 | 2,840 | 779 | 50.0 |
| Example | 57.2 | 13.8 | 59.6 | 3,150 | 856 | 50.0 |

In a case where no control is performed, power supplied to the ultraviolet light irradiation unit 10 greatly varies. Such a variation causes a large load on the lighting circuit 20, and therefore there is a possibility that a problem, such as damage to circuit elements or the like constituting the lighting circuit 20, arises.

According to the results described above, in a case where the power consumption of the DC power supply 21 was adjusted to approach the value of Reference 1 from the state of Reference 2, a voltage and a current between the electrodes (13a, 13b) in Example are closer to the values of Reference 1 than those in Comparative Example. Stated another way, control performed by adjusting the frequency in switching control performed on the switching elements (22a, 22b) can supply power close to the power of Reference 1 to the ultraviolet light irradiation unit 10 in comparison with control performed by adjusting the output voltage of the DC power supply 21.

In other words, it is confirmed that, in the method for controlling the frequency of the switching element (22a, 22b), a variation in a voltage applied to the electrodes (13a, 13b) of the ultraviolet light irradiation unit 10 and a variation in supplied power are small before and after a change in the electric conductivity of the liquid, in comparison with the method for changing the output voltage of the DC power supply 21.

In view of the above, by employing the configuration described above, even if a treatment state of the liquid, that is, the electric conductivity of the liquid varies, power for generating ultraviolet light is stably supplied between the electrodes (13a, 13b) of the ultraviolet light irradiation unit 10. Accordingly, a load on the lighting circuit 20 is reduced. Furthermore, the fluid treatment device 1 having the configuration described above enables the ultraviolet light irradiation unit 10 to stably generate ultraviolet light, regardless of a treatment state of liquid.

In the first embodiment, the ultraviolet light irradiation unit 10 includes the reservoir 12 that includes the side wall made of metal, and the reservoir 12 itself also functions as the second electrode 13b. However, the second electrode 13b may be provided separately from the reservoir 12. For example, an outer wall surface of the reservoir 12 may be constituted by a dielectric, and the second electrode 13b may be provided on the outer wall surface. Valves (15a, 15b) made of metal may be employed, and at least one of the valves (15a, 15b) may also function as the second electrode 13b.

Furthermore, in the first embodiment, the second electrode 13b is grounded. However, in a case where no specified problems occur in electrical stability or the like in the ultraviolet light irradiation unit 10, the second electrode 13b does not need to be grounded.

Moreover, in the first embodiment, the lighting circuit 20 has a push-pull type circuit configuration. However, the lighting circuit 20 can be of a half-bridge type or a full-bridge type in which a direction of the primary current I1 that flows through the primary winding L1 is changed to generate electromotive force in the secondary winding L2, similarly to the push-pull type.

### [Second embodiment]

A configuration of a second embodiment of a fluid treatment device 1 according to the present invention will be described focusing on a difference from the first embodiment.

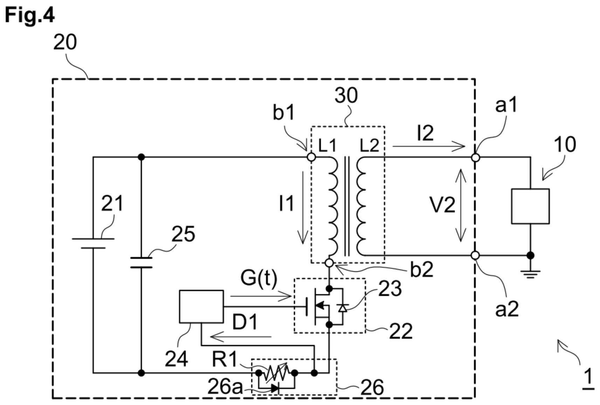

Fig. 4 is a schematic diagram illustrating a configuration of a lighting circuit 20 according to the second embodiment. The lighting circuit 20 is an example of a circuit configuration called a flyback type, and as illustrated in Fig. 4, the lighting circuit 20 includes a DC power supply 21, a single switching element 22, a controller 24, a detection unit 26, and a transformer 30.

The transformer 30 includes a primary winding L1 and a secondary winding L2. From among terminals included in the primary winding L1 of the transformer 30, a first terminal b1 is connected to a positive-electrode side terminal of the DC power supply 21, and a second terminal b2 is connected to a negative-electrode side terminal of the DC power supply 21 via the switching element 22.

The switching element 22 according to the second embodiment includes a field effect transistor (FET), and the switching element 22 includes a parasitic diode 23 in which an anode is connected to the negative electrode-side terminal of the DC power supply 21 and a cathode is connected to the primary winding L1 of the transformer 30. In the second embodiment, this parasitic diode 23 functions as a regenerative circuit.

Note that as the switching element 22, an element as opposed to the field effect transistor (FET) may be employed. Furthermore, as the switching element 22, an IGBT, a relay element, or the like that does not include the parasitic diode 23 may be employed, and a single diode element may be connected in parallel to the switching element 22 to form the regenerative circuit.

As illustrated in Fig. 4, the detection unit 26 according to the second embodiment includes a resistor R1 that is connected in series to the switching element 22, and the detection unit 26 outputs a detection signal D1 including a value of a voltage that is generated between terminals of the resistor R1 due to a flow of a primary current I1 that flows through the switching element 22. However, the configuration of the detection unit 26 is not limited to this configuration. For example, the detection unit 26 may include a shunt resistor, and may be configured to measure a value of a shunted current to detect a current value of the primary current 11.

In addition, in order to prevent the detection unit 26 from consuming a regenerative current that flows through a circuit on a side of the primary winding L1, the detection unit 26 may include the resistor R1, and may also include a diode element 26a in which an anode terminal is connected to a negative electrode terminal side of the DC power supply 21 and a cathode terminal is connected to a positive electrode terminal side of the DC power supply 21.

As a result of this, in a case where the electric conductivity of the liquid has significantly changed, the detection unit 26 detects a variation in the electric conductivity, the detection signal D1 is output to the controller 24, and the controller 24 controls the ON/OFF state of the switching element 22 on the basis of information included in the detection signal D1. In other words, in a case in which the electric conductivity of the liquid drastically varies, a load on the circuit on the side of the primary winding L1 can be minimized. Accordingly, the fluid treatment device 1 having the configuration described above provides an extended allowable range for the electric conductivity of a liquid to be treated in comparison with other configurations.

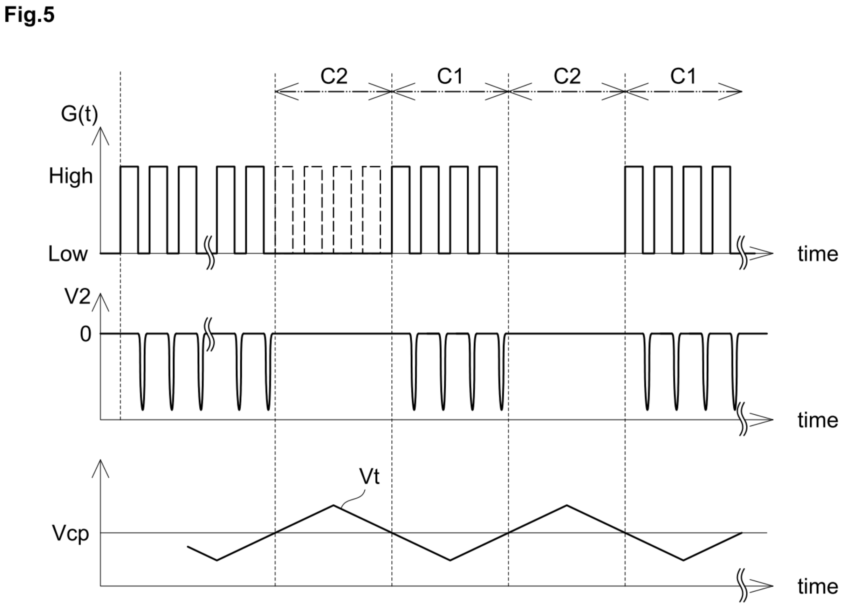

Next, an operation according to the second embodiment will be described. Fig. 5 is a timing chart schematically illustrating an example of a determination method performed by the controller 24 in response to changes over time in a control signal G(t) and a secondary voltage V2, and a voltage detected by the detection unit 26. In the graph of the control signal G(t) in Fig. 5, a High level indicates that the switching element 22 is controlled to be in the ON state, and a Low level indicates that the switching element 22 is controlled to be in the OFF state.

The secondary voltage V2 illustrated in Fig. 5 corresponds to a potential of the first electrode terminal a1 relative to a potential of the second electrode terminal a2 in Fig. 4. In the second embodiment, the second electrode terminal a2 is grounded.

When the reservoir 12 is filled with water to be treated, the controller 24 starts an operation to generate ultraviolet light in the light-emitting tube 11 of the ultraviolet light irradiation unit 10.

The controller 24 switches the control signal G(t) from the Low level to the High level to switch the switching element 22 from the OFF state to the ON state.

After the switching element 22 has switched from the OFF state to the ON state, the primary current I1 that flows through the primary winding L1 of the transformer 30 gradually increases.

When a predetermined time period has passed, the controller 24 switches an output of the control signal G(t) from the High level to the Low level. As a result, the switching element 22 switches from the ON state to the OFF state.

When the switching element 22 has switched from the ON state to the OFF state, the primary current I1 stops. Then, in response to a steep variation in the primary current I1, electromotive force is generated in the secondary winding L2, and power is supplied to the ultraviolet light irradiation unit 10.

At this time, electromotive force is generated in the primary winding L1 of the transformer 30 due to energy that has not been consumed by the ultraviolet light irradiation unit 10, and in response to this electromotive force, a regenerative current is generated. In the second embodiment, the parasitic diode 23 included in the switching element 22 causes the regenerative current to flow from the negative electrode terminal side to the positive electrode terminal side of the DC power supply 21. Thereafter, the controller 24 switches the control signal G(t) to be output to the switching element 22 from the Low level to the High level again to switch the switching element 22 from the OFF state to the ON state. Thereafter, the controller 24 repeats the operation described above.

The detection unit 26 that is connected to the circuit on the side of the primary winding L1 detects a voltage during a flow of the primary current I1 through the detection unit 26, and transmits the detection signal D1 to the controller 24. Although not illustrated in Fig. 4, the controller 24 is equipped with a comparator that compares a detection voltage (Vcp = R1 × 11) that has been output from the detection unit 26 with a predetermined reference voltage, and outputs an output signal that corresponds to a comparison result. However, the controller 24 is not necessarily equipped with the comparator, and a combination of necessary circuit parts may be included.

The detection unit 26 detects a current value or a power value in the circuit on the side of the primary winding L1 of the transformer 30, and therefore, at a timing when a value of the product of the primary current I1 and a resistance value of the resistor R1, i.e., a value of a voltage between the terminals of the resistor R1, reaches a predetermined reference voltage, the controller 24 shifts from a first control mode C1 of performing a normal operation to a second control mode C2 of suppressing excess power. Here, the second control mode according to the present embodiment is performed during a period longer than a period of repeating the ON state and the OFF state of the switching element 22 in the first control mode, as illustrated in Fig. 5. However, a time period during which the second control mode is performed may be arbitrarily set.

By switching between the first control mode C1 and the second control mode C2, as described above, control is performed in such a way that a power value is less than or equal to a predetermined reference value even in a case where the electric conductivity of the liquid has drastically varied. Note that the controller 24 may employ various methods for controlling a power value in the circuit on the side of the primary winding L1 of the transformer 30, in addition to the method described above.

In the second control mode C2, the control signal G(t) of the switching element 22 is maintained in the OFF state during a period during which a detection voltage Vcp is lower than a comparison voltage Vt that periodically varies. As a result, the power value in the circuit on the side of the primary winding L1 is controlled to be less than or equal to a reference value. This reliably reduces a load on the circuit on the side of the primary winding L1, even in a case where the electric conductivity of the liquid has varied. Without being limited to the aspect of Fig. 5, the second control mode may be performed during a period during which the detection voltage Vcp is higher than the comparison voltage Vt to perform control in such a way that the control signal G(t) of the switching element is maintained in the OFF state. A comparison voltage Vt used in this case has a waveform having a phase opposite to that of the waveform illustrated in Fig. 5.

Thus, by employing the configuration described above, in the fluid treatment device 1, a voltage applied to the ultraviolet light irradiation unit 10 is hardly affected by a change in electric conductivity of water to be treated due to progression of the treatment. In other words, the fluid treatment device 1 having the configuration described above enables the ultraviolet light irradiation unit 10 to stably light up, regardless of a treatment state of the liquid to be treated.

In a case where a push-pull circuit that operates at a resonance frequency is used, a plurality of resonant capacitors having different capacitances is installed in the lighting circuit 20, and a resonant capacitor to be used during operation is switched in response to a data signal from the detection unit 26 such that the operating frequency of the ultraviolet light irradiation unit 10 can be changed. Such control can reduce a load on the lighting circuit 20.

### [Other embodiments]

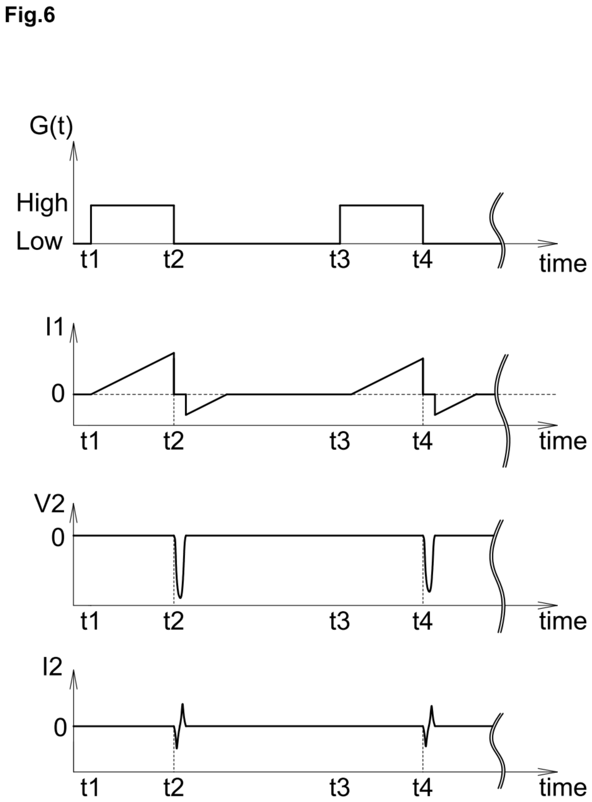

Hereinafter, other embodiments will be described.
<1> The detection unit 26 included in the fluid treatment device 1 may include a device that directly measures the electric conductivity of fluid. For example, a TOC monitor may be used that compares and measures the electric conductivity of water at a time when irradiation with ultraviolet light is performed and the electric conductivity of water at a time when irradiation with ultraviolet light is not performed, and measures the purity of water. The use of the TOC monitor as the detection unit 26 makes it possible to indirectly derive the electric conductivity of water to be treated and to monitor how far water treatment has proceeded.
<2> Fig. 6 is a timing chart schematically illustrating an example of changes over time in the control signal G(t), the primary current I1, the secondary voltage V2, and the secondary current I2, and illustrates a case where the controller 24 has operated to cause the switching element 22 to shift from the OFF state to the ON state after a predetermined OFF holding time period has passed from a point in time at which a regenerative current that flows through the primary winding L1 has reached a zero value.

In the present embodiment, the control signal G(t) from the controller 24 is set in such a way that a time period during which the switching element 22 is held in the OFF state varies according to the detection signal D1 from the detection unit 26. This controls a power value of the circuit on the side of the primary winding L1 to be less than or equal to a reference value, and therefore control is performed on power of the circuit on the side of the primary winding L1 that corresponds to the detection signal D1 from the detection unit 26. This can reliably reduce a load on the circuit on the side of the primary winding L1 in a case where the electric conductivity of liquid has varied.

<2> The configurations described above of the fluid treatment device 1 and the lighting circuit 20 are merely examples, and the present invention is not limited to each of the illustrated configurations.

### DESCRIPTION OF REFERENCE SIGNS

- 1: Fluid treatment device
- 10: Ultraviolet light irradiation unit
- 11: Light-emitting tube
- 11a: Space
- 12: Reservoir
- 13a: First electrode
- 13b: Second electrode
- 14: Pinch sealing portion
- 20: Lighting circuit
- 21: DC power supply
- 22: Switching element
- 23: Parasitic diode
- 24: Controller
- 25: Smoothing capacitor
- 26: Detection unit
- 26a: Diode element
- 30: Transformer
- 40: Capacitance control circuit
- 41: Resistance control circuit
- A1: Space
- L1: Primary winding
- L2: Secondary winding
- a1: First electrode terminal
- a2: Second electrode terminal
- b1: First terminal
- b2: Second terminal

## Claims

1. A fluid treatment device comprising:
a lighting circuit that includes a DC power supply, a transformer including a primary winding and a secondary winding, and at least one switching element, the lighting circuit being configured to switch between supplying and stopping of a current from the DC power supply to the primary winding of the transformer or change a direction of a current that flows through the primary winding in accordance with switching of the switching element between an ON state and an OFF state, and to cause the secondary winding of the transformer to generate electromotive force;
an ultraviolet light irradiation unit that includes a first electrode disposed in a light-emitting tube in which a light-emitting gas is sealed, and a second electrode disposed apart from the light-emitting tube, a space into which a fluid to be treated flows being interposed between the first electrode and the second electrode, the ultraviolet light irradiation unit being connected to the secondary winding of the transformer;
a detection unit that directly or indirectly detects an electric conductivity of the fluid; and
a controller that controls a frequency at which the switching element is switched between the ON state and the OFF state on a basis of the electric conductivity of the fluid that has been detected by the detection unit, or a parameter relating to the electric conductivity of the fluid.

2. The fluid treatment device according to claim 1, wherein the lighting circuit is a circuit of any of a push-pull type, a full-bridge type, and a half-bridge type.

3. The fluid treatment device according to claim 1, wherein the lighting circuit is a circuit of a flyback type.

4. The fluid treatment device according to claim 1, wherein the detection unit is connected to the secondary winding of the transformer.

5. The fluid treatment device according to claim 1, wherein the detection unit is a TOC monitor that directly detects the electric conductivity of the fluid.

6. The fluid treatment device according to claim 1, wherein the detection unit is connected to the primary winding of the transformer.

7. The lighting circuit according to any one of claims 1 to 6.
